# EUROPEAN PATENT APPLICATION

(11) **EP 2 822 280 A1**
(43) Date of publication of application: **07.01.2015**
(21) Application number: 12870240.4
(22) Date of filing: 25.12.2012
(51) Int. Cl.: H04N 13/04

(54) **IMAGE PROCESSING DEVICE, IMAGE PROCESSING METHOD, AND COMPUTER PROGRAM**

(30) Priority: 27.02.2012 JP 2012039715
(71) Applicant: Sony Corporation, Tokyo 108-0075 (JP)
(72) Inventor: SOMEYA, Kiyoto, Tokyo 108-0075 (JP); MIYAMOTO, Kohei, Tokyo 108-0075 (JP); IZUMI, Nobuaki, Tokyo 108-0075 (JP); KUMA, Satoru, Tokyo 108-0075 (JP); ANDO, Yuji, Tokyo 108-0075 (JP)
(74) Representative: Turner, James Arthur
(86) International application number: PCT/JP2012/083437
(87) International publication number: WO 2013/128765

(57) **Abstract**

Provided is an image processing device including a disparity detector configured to receive a plurality of 3D images and detect disparity of each of the 3D images, a disparity analyzer configured to generate statistical information about disparity of each 3D image using the disparity of each 3D image detected by the disparity detector, and a disparity controller configured to convert the disparity using the statistical information about disparity of each 3D image generated by the disparity analyzer in such a manner that the 3D images are not overlapped so that a range of the disparity is within a predetermined range.

## Description

### Technical Field

The present disclosure relates to an image processing device, an image processing method, and a computer program.

### Background Art

Technologies for display of a 3D image that allows a viewer to experience a stereoscopic view of an image have been widely developed. In addition, a technology for combining and displaying a plurality of 3D images has also been reported (refer to Patent Literature 1). In Patent Literature 1, there is disclosed a technique that is intended to relieve eye strain that may be caused when a 3D sub image is combined with a 3D main image and the resulting combined image is displayed, if the position of the 3D main image in a depth direction which is perpendicular to a screen of the 3D main image will be placed too far away from or too close to the position of the sub image in a depth direction, which gives eye strain to the user.

### Citation List

### Patent Literature

Patent Literature 1: JP 2011-166761A

### Summary of Invention

### Technical Problem

In the technique disclosed in Patent Literature 1, the main and sub images are corrected using statistical information of each of the 3D main and sub images so that a distance between the positions in the depth direction of the main and sub images is within a predetermined range.

However, when 3D main and sub images are corrected by shifting an image to the depth direction as a whole, the dynamic range of disparity of each image is not changed accordingly, thereby, in some cases, causing a problem of an inconsistent image in which a 3D image is displayed while being subsided into another 3D image.

Therefore, the present disclosure is made in view of such a problem and provides a novel and improved image processing device, image processing method, and computer program, capable of preventing an inconsistent image from being generated when a plurality of 3D images are combined, thereby giving far less strain and fatigue to the eyes of the user.

### Solution to Problem

According to the present disclosure, there is provided an image processing device including a disparity detector configured to receive a plurality of 3D images and detect disparity of each of the 3D images, a disparity analyzer configured to generate statistical information about disparity of each 3D image using the disparity of each 3D image detected by the disparity detector, and a disparity controller configured to convert the disparity using the statistical information about disparity of each 3D image generated by the disparity analyzer in such a manner that the 3D images are not overlapped so that a range of the disparity is within a predetermined range.

According to the above embodiment, the disparity detector detects disparity for each of the supplied plurality of 3D images, and the disparity analyzer generates disparity statistical information for each 3D image using the disparity for each 3D image detected by the disparity detector. The disparity controller converts the disparity using the disparity statistical information for each 3D image generated by the disparity analyzer in such a manner that the 3D images are not overlapped so that a range of the disparity is within a predetermined range. As a result, the image processing device can prevent an inconsistent image from being generated when a plurality of 3D images are combined, and thereby giving far less strain and fatigue to the eyes of the user.

According to the present disclosure, there is provided an image processing method including receiving a plurality of 3D images and detecting disparity of each of the 3D images, generating statistical information about disparity of each 3D image using the detected disparity of each 3D image, and converting the disparity using the generated statistical information about disparity of each 3D image in such a manner that the 3D images are not overlapped so that a range of the disparity is within a predetermined range.

According to the present disclosure, there is provided a computer program for causing a computer to execute receiving a plurality of 3D images and detecting disparity of each of the 3D images, generating statistical information about disparity of each 3D image using the detected disparity of each 3D image, and converting the disparity using the generated statistical information about disparity of each 3D image in such a manner that the 3D images are not overlapped so that a range of the disparity is within a predetermined range.

### Advantageous Effects of Invention

According to one or more embodiments of the present disclosure as described above, there can be provided a novel and improved image processing device, image processing method, and computer program, capable of preventing an inconsistent image from being generated when a plurality of 3D images are combined, thereby giving far less strain and fatigue to the eyes of the user.

### Brief Description of Drawings

[FIG. 1] FIG. 1 is a schematic diagram for explaining a functional configuration of an image processing device according to a first embodiment of the present disclosure.
[FIG. 2] FIG. 2 is a schematic diagram for explaining an example of disparity statistical information generated by disparity analyzers 120a and 120b.
[FIG. 3] FIG. 3 is a flowchart illustrating the operation of the image processing device 100 according to the first embodiment of the present disclosure.
[FIG. 4] FIG. 4 is a flowchart illustrating the operation of the image processing device 100 according to the first embodiment of the present disclosure.
[FIG. 5] FIG. 5 is a schematic diagram for explaining an example where a disparity controller 130 converts disparity statistical information of a 3D image to statistical information corresponding to each display size.
[FIG. 6] FIG. 6 is a schematic diagram for explaining an example of statistical information determined by the disparity analyzers 120a and 120b.
[FIG. 7] FIG. 7 is a schematic diagram for explaining an example of statistical information determined by the disparity analyzers 120a and 120b.
[FIG. 8] FIG. 8 is a schematic diagram for explaining an example of calculating the amount of correction so that the range of disparity determined for each 3D image is not overlapped with the range of disparity of other 3D images.
[FIG. 9] FIG. 9 is a schematic diagram for explaining an example of calculating the amount of correction for each 3D image.
[FIG. 10] FIG. 10 is a schematic diagram for explaining an example of calculating the amount of correction for each 3D image.
[FIG. 11] FIG. 11 is a schematic diagram for explaining an example of the relationship between an original 3D image and each of disp_min and disp_max.
[FIG. 12] FIG. 12 is a schematic diagram for explaining an example where a 3D image is subjected to the 2D to 3D conversion and thus the range of disparity of the 3D image is within the range of values of disp_min and disp_max.
[FIG. 13] FIG. 13 is a schematic diagram for explaining a functional configuration of an image processing device according to a second embodiment of the present disclosure.
[FIG. 14] FIG. 14 is a flowchart illustrating the operation of the image processing device 100 according to the second embodiment of the present disclosure.
[FIG. 15] FIG. 15 is a schematic diagram for explaining an example of positional relationship between objects in a 3D image.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description will be made in the following order.

### <1. First Embodiment>

### [Exemplary Configuration of Image Processing Device]

### [Operation of Image Processing Device]

### <2. Second Embodiment>

### [Exemplary Configuration of Image Processing Device]

### [Operation of Image Processing Device]

### <3. Summary>

### <1. First Embodiment>

### [Exemplary Configuration of Image Processing Device]

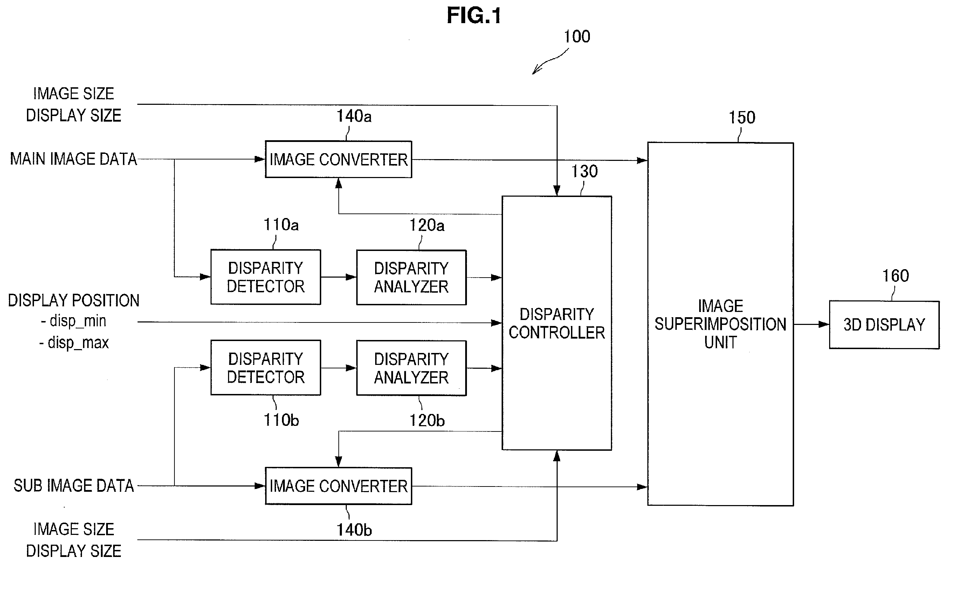

An exemplary functional configuration of an image processing device according to a first embodiment of the present disclosure will be described first. FIG. 1 is a schematic diagram for explaining a functional configuration of the image processing device according to the first embodiment of the present disclosure. The functional configuration of the image processing device according to the first embodiment of the present disclosure is now described with reference to FIG. 1.

The image processing device 100 receives main image data, sub image data, and so on, which are read out from a recording medium such as BD (Blu-ray™ disc) or are transmitted from external equipment via a network or the like. As used herein, the term "main image data" refers to image data of a 3D main image having a predetermined size for one screen, and the term "sub image data" refers to image data of a 3D sub image having a predetermined size for one screen. A main image is, for example, the image that may be regarded as a main component of a 3D image. A sub image may be the image including captions, special effects, and other things that are attached to an image regarded as a main component and then are displayed. In addition, a sub image may be an image displayed in a part of a main image. The image processing device 100 combines a 3D main image and a 3D sub image to generate combined image data.

As shown in FIG. 1, the image processing device 100 is configured to include disparity detectors 110a and 110b, disparity analyzers 120a and 120b, a disparity controller 130, image converters 140a and 140b, an image superimposition unit 150, and a display 160.

The disparity detector 110a detects disparity of a 3D main image for each pixel using image data of a main image for the left eye and image data of a main image for the right eye, which constitute main image data inputted from the outside. The detection of disparity may employ, for example, a technique disclosed in JP 2011-055022A. The disparity detector 110a, when detecting disparity of a 3D main image for each pixel, provides data regarding the detected disparity to the disparity analyzer 120a. The disparity may be detected from a block including a plurality of pixels rather than from a single pixel.

Similarly, the disparity detector 110b detects disparity of a 3D sub image for each pixel using image data of a main image for the left eye and image data of a sub image for the right eye, which constitute sub image data inputted from the outside. The disparity detector 110b, when detecting disparity of a 3D sub image, provides data regarding the detected disparity to the disparity analyzer 120b.

The disparity analyzer 120a analyzes disparity information of the 3D main image detected by the disparity detector 110a and generates disparity statistical information of the 3D main image. The disparity analyzer 120a may generate, as disparity statistical information, a disparity distribution, for example, by employing a technique disclosed in JP 2011-055022A or a disparity map that indicates disparity for each pixel of a main image. The generation of a disparity map may employ, for example, a technique disclosed in JP 2006-114023A. The disparity analyzer 120a, when generating disparity statistical information of a 3D main image, provides the generated disparity statistical information to the disparity controller 130.

Similarly, the disparity analyzer 120b analyzes disparity information of the 3D sub image detected by the disparity detector 110b and generates disparity statistical information. The disparity analyzer 120b, when generating disparity statistical information of the 3D sub image, provides the generated disparity statistical information to the disparity controller 130.

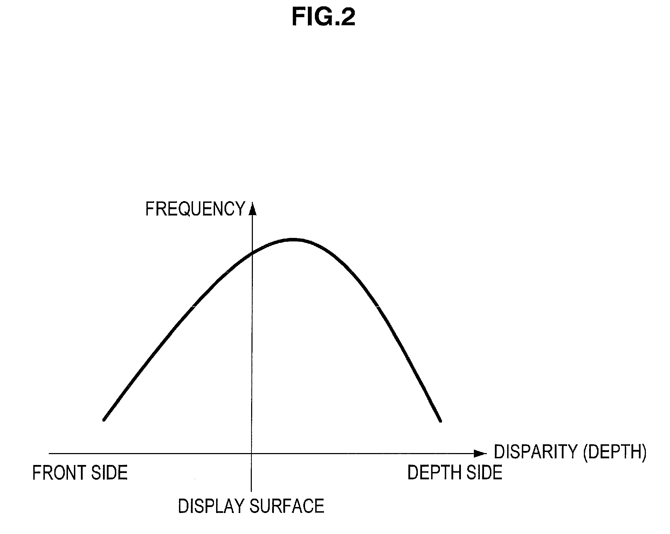

FIG. 2 is a schematic diagram for explaining an example of disparity statistical information generated by the disparity analyzers 120a and 120b. The disparity analyzers 120a and 120b analyze disparity information of the 3D main and sub images and generate disparity statistical information as shown in FIG. 2. FIG. 2 shows an example where there is the most frequent disparity in the depth side from a display surface.

The disparity controller 130 receives the image size, display size, and display position of a 3D main image, which are inputted from the outside. In addition, the disparity controller 130 receives the image size, display size, and display position of a 3D sub image, which are inputted from the outside. Information indicating a reference value of disparity in the front and depth sides, which is not allowed to be exceeded as a 3D image, is provided to the disparity controller 130 as information regarding the display position.

A 3D image in which the disparity in the depth side of a screen is larger than the distance between the eyes is incapable of being viewed by human eyes. Accordingly, at least in a 3D main image, the disparity in the depth side of a screen is necessary not to exceed the distance between the eyes. In addition, in order for a human to fuse images visually as a 3D image with the eyes, it is necessary to consider the amount of disparity in the front side of a screen. Although this amount of disparity is not possible to determine uniformly because of individual differences, according to the safety guidelines for 3D video (3DC safety guidelines) established by the 3D consortium, if the disparity angle of a 3D video is set to be within 1 degree in a television that can display the 3D video, the 3D video becomes comfortable to the eyes (http://www.3dc.gr.jp/jp/scmt_wg_rep/guide_index.html). In other words, the disparity of a 3D image is necessary to be within a certain range. Information about the range is provided to the disparity controller 130. As used herein, the reference value of disparity in the front side of a screen, which is not allowed to be exceeded, is set as disp_min, and the reference value of disparity in the depth side of a screen is set as disp_max.

The disparity controller 130 determines a method of correction and an amount of correction that are used to adjust the disparity (depth) of the respective main and sub images so that inconsistency such as subsidence does not occur. The determination by the disparity controller 130 is based on statistical information of a 3D main image provided from the disparity analyzer 120a and statistical information of a 3D sub image provided from the disparity analyzer 120b. The way of determining the method and amount of correction that are used to allow the disparity controller 130 to adjust the disparity (depth) of the respective main and sub images will be described in detail later. When the disparity controller 130 determines a method of correction and an amount of correction that are used to adjust the disparity (depth) of the respective 3D main and sub images, the disparity controller 130 provides information about the method and amount of correction to the image converters 140a and 140b. The method of correction used to correct 3D main and sub images will be described in detail later.

The image converter 140a processes the 3D main image, based on the method and amount of correction that are used to adjust the disparity (depth) of the 3D main image and are determined by the disparity controller 130. The image converter 140a, when processing the 3D main image, provides the processed 3D main image to the image superimposition unit 150.

Similarly, the image converter 140b processes the 3D sub image, based on the method and amount of correction that are used to adjust the disparity (depth) of the 3D sub image and are determined by the disparity controller 130. The image converter 140b, when processing the 3D sub image, provides the processed 3D sub image to the image superimposition unit 150.

The image superimposition unit 150 superimposes the 3D main image processed by the image converter 140a and the 3D sub image processed by the image converter 140b. The image superimposition unit 150, when superimposing the 3D main and sub images, provides image data to be displayed that is obtained by superimposition to the display 160.

The display 160 is formed of a 3D display capable of displaying a 3D image. The display 160 displays a screen for the left eye and a screen for the right eye in a time division manner using the image data to be displayed that is provided from the image superimposition unit 150. In this case, the user views an image displayed on the display 160, for example, by wearing glasses with shutters synchronized with switching between screens for the left eye and the right eye. The user views the screen for the left eye with only the left eye and views the screen for the right eye screen with only the right eye. Thus, the user can view a 3D image in which a 3D main image and a 3D sub image are superimposed on each other.

The display 160 may be formed of a 3D display that allows the user to recognize a 3D image with naked eyes. Such a 3D display employs, for example, a parallax barrier system (disparity barrier system), a lenticular system, or the like.

As described above, the functional configuration of the image processing device according to the first embodiment of the present disclosure has been described with reference to FIG. 1. Subsequently, an operation of the image processing device according to the first embodiment of the present disclosure will be described.

### [Operation of Image Processing Device]

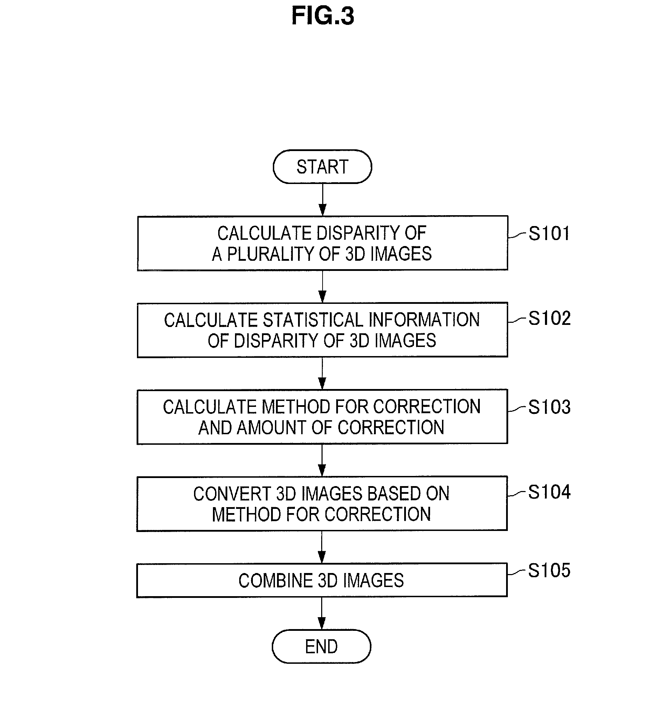

FIG. 3 is a flowchart illustrating the operation of the image processing device 100 according to the first embodiment of the present disclosure. The operation of the image processing device 100 according to the first embodiment of the present disclosure is described with reference to FIG. 3.

The image processing device 100 according to the first embodiment of the present disclosure, when receiving a plurality of 3D image data (for example, 3D main image data and 3D sub image data), calculates disparity of the respective 3D images (step S101). The calculation of disparity of the 3D images is executed by the disparity detectors 110a and 110b. The detection of disparity may employ, for example, a technique disclosed in JP 2011-055022A as described above. If disparity information is known from information received together with 3D image data, the disparity calculation process in step S101 may be skipped.

If disparity of each 3D image for a plurality of 3D image data is calculated in step S101, then the image processing device 100 analyzes disparity information of each 3D image and generates disparity statistical information of the 3D image (step S102). The generation of disparity statistical information of the 3D image is executed by the disparity analyzers 120a and 120b. The disparity analyzers 120a and 120b may generate, as the disparity statistical information, a disparity distribution, for example, using a technique disclosed in JP 2011-055022A or a disparity map that indicates disparity for each pixel of a main image. The generation of the disparity map may employ, for example, a technique disclosed in JP 2006-114023A.

If the disparity statistical information of the 3D image is generated by analyzing disparity information of the 3D image for a plurality of 3D image data in step S102, then the image processing device 100 calculates a method and amount of correction which are used to correct the 3D image using the disparity statistical information and information including an image size, display size, and display position of the 3D image (step S103). The calculation of a method and amount of correction used to correct each 3D image is executed by the disparity controller 130.

If the method and amount of correction used to correct each 3D image are calculated in step S103, then the image processing device 100 converts the 3D image based on the method and amount of correction of each 3D image calculated in step S103 (step S104). The conversion of the 3D image is executed by the image converters 140a and 104b.

If each 3D image is converted in step S104, based on the method and amount of correction of 3D image calculated in step S103, then the image processing device 100 combines a plurality of 3D images and generates display image data used to display them as one 3D image (step S105).

The image processing device 100 according to the first embodiment of the present disclosure performs the operation as shown in FIG. 3 and thus allows an inconsistent image that may be occurred when a plurality of 3D images are combined to be prevented from being generated, thereby giving far less strain and fatigue to the eyes of the user.

Subsequently, a method for calculating the correction method and amount of correction used to correct the 3D image in step S103 will be described in detail.

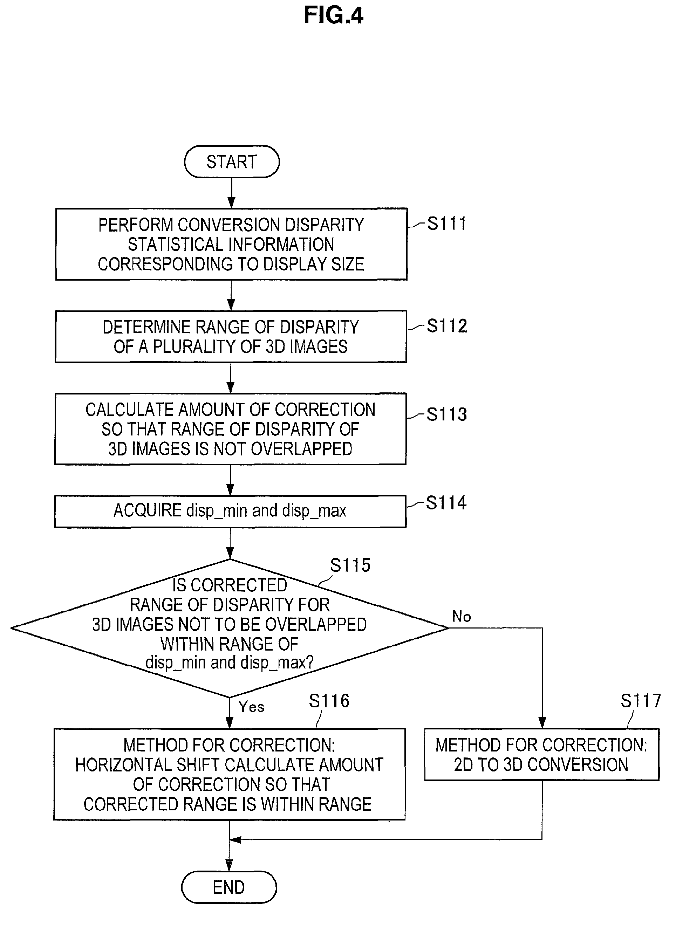

FIG. 4 is a flowchart illustrating the operation of the image processing device 100 according to the first embodiment of the present disclosure. The flowchart of FIG. 4 shows in detail the calculation of the method and amount of correction used to correct the 3D image shown in step S103 of FIG. 3. In the following, the description will be made on the assumption that the disparity controller 130 performs the operation shown in FIG. 4. The operation of the image processing device 100 according to the first embodiment of the present disclosure is described with reference to FIG. 4.

In order to calculate the method and amount of correction used to correct a 3D image, the disparity controller 130 first converts disparity statistical information of a plurality of 3D images to statistical information corresponding to each display size (step S111). For example, if the display size is twice the size of the image, the disparity statistical information (amount of disparity) becomes twice.

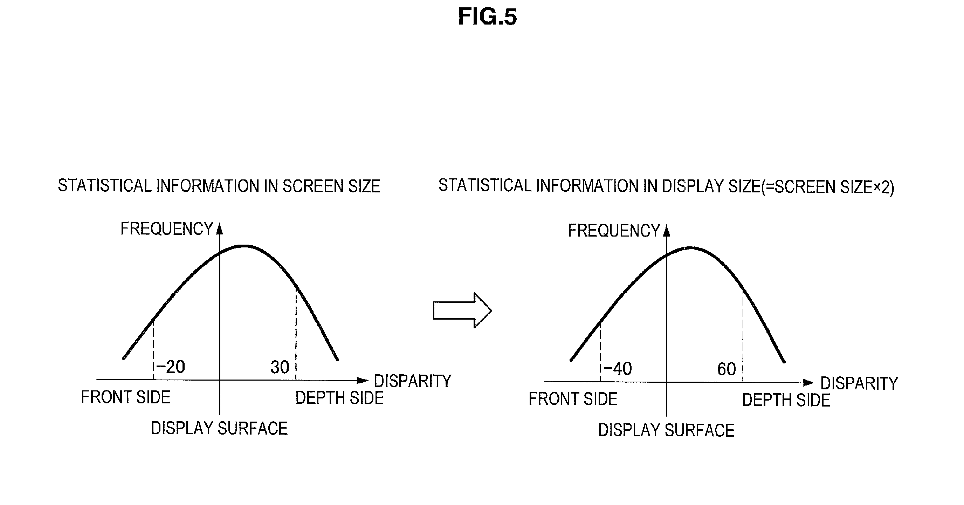

FIG. 5 is a schematic diagram for explaining an example where the disparity controller 130 converts disparity statistical information of a 3D image to statistical information corresponding to each display size. For example, when disparity statistical information is obtained by the disparity analyzer 120a (or the disparity analyzer 120b) as shown in the graph on the left of FIG. 5, if a display size is twice the size of an original image, the disparity controller 130 converts the amount of disparity in the disparity statistical information into double as shown on the right of FIG. 5. The disparity controller 130 executes the conversion process of statistical information for all of the 3D images.

If the disparity controller 130 converts disparity statistical information of a plurality of 3D images to statistical information corresponding to each display size in step S111, then the disparity controller 130 determines the range of disparity of each of a plurality of 3D images after converting (step S 112). The range of disparity represents a range from disparity in the foremost side to disparity in the deepest side and corresponds to the dynamic range of depth. If the statistical information determined by the disparity analyzers 120a and 120b is a disparity distribution, the effective width in the horizontal axis of the disparity distribution becomes the range of disparity. If the disparity statistical information determined by the disparity analyzers 120a and 120b is a disparity map, the disparity in the foremost side and the disparity in the deepest side of the map become the range of disparity.

The disparity controller 130 may determine the range of disparity in consideration of the influence of noise, the accuracy of disparity detection, or the false detection of disparity when determining the range of disparity. For example, if the statistical information determined by the disparity analyzers 120a and 120b is a disparity distribution, the disparity controller 130 may perform threshold processing that excludes disparity having frequency equal to or less than a given value or disparity in which the ratio of frequency in the whole frequency is equal to or less than a given value from the range of disparity in consideration of the influence of noise or the like. In addition, the disparity controller 130 may perform exclusion processing that excludes a disparity distribution isolated from a major disparity distribution from the range of disparity.

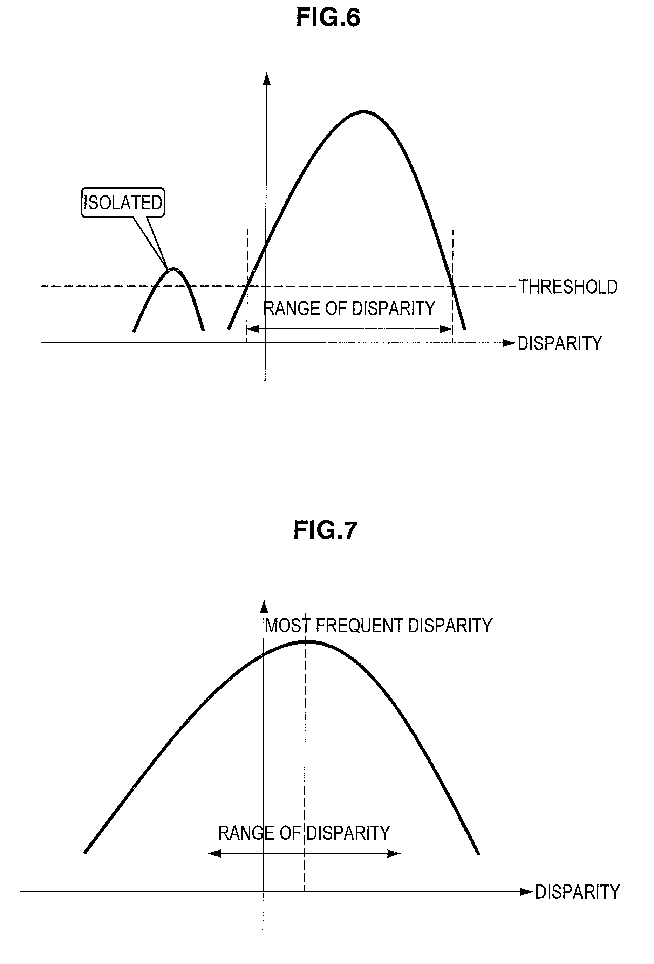

FIG. 6 is a schematic diagram for explaining an example of statistical information determined by the disparity analyzers 120a and 120b. FIG. 6 illustrates how there is a disparity distribution isolated from a major disparity distribution in the statistical information determined by the disparity analyzers 120a and 120b. The disparity controller 130 may perform exclusion processing that excludes a disparity distribution isolated from a major disparity distribution from the range of disparity.

Furthermore, the disparity controller 130, when determining the range of disparity, may perform most frequent-centered processing that gives preference to the most frequent disparity and determines a range of disparity with a given extent around the preferred most frequent disparity. This is because it is considered that a major subject or the like is more likely to be included in an image having the most frequent disparity.

FIG. 7 is a schematic diagram for explaining an example of statistical information determined by the disparity analyzers 120a and 120b. FIG. 7 illustrates how to determine the range of disparity with a given extent around the most frequent disparity in the statistical information determined by the disparity analyzers 120a and 120b.

If the statistical information determined by the disparity analyzers 120a and 120b is a disparity map, the range of disparity may be similarly determined using threshold processing, exclusion processing, or most frequent-centered processing.

If the disparity controller 130 determines the range of disparity of each of a plurality of 3D images after converting in step S 112, then the disparity controller 130 calculates the amount of correction so that the range of disparity determined for each 3D image is not overlapped with the range of disparity of other 3D images (step S113).

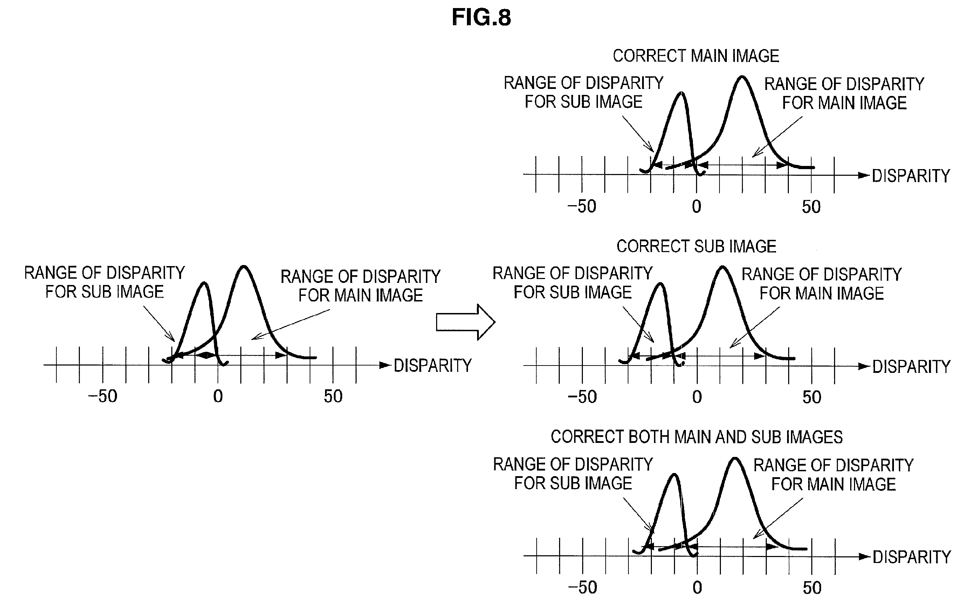

FIG. 8 is a schematic diagram for explaining an example of calculating the amount of correction so that the range of disparity determined for each 3D image is not overlapped with the range of disparity of other 3D images. For example, as shown in FIG. 8, when a 3D image obtained by combining a 3D sub image in front of a 3D main image is displayed, if the range of disparity of main image data is from - 10 to 30 and the range of disparity of sub image data is from -20 to 0, then the range of disparity from -10 to 0 is overlapped.

Accordingly, the disparity controller 130 corrects a 3D main image to be shifted to the depth side by 10 and corrects a 3D sub image to be shifted to the front side by -10. Alternatively, the disparity controller 130 may correct the main image to be shifted to the depth side and correct the sub image to be shifted to the front side so that the total amount of correction of main and sub images is 10. It may be possible to shift the disparity of a 3D main image while not shifting the disparity of a 3D sub image.

This amount of correction represents a value of the disparity that allows the left and right images to be shifted in the direction perpendicular to the display surface. The disparity controller 130 changes disparity by shifting the entire 3D image in the direction perpendicular to the display surface.

However, people cannot view a 3D image in which disparity in the depth side of a screen is larger than the distance between the eyes. Accordingly, at least in a 3D main image, disparity in the depth side of a screen is necessary not to exceed the distance between the eyes. In addition, in order for a human to fuse images visually as a 3D image with the eyes, it is necessary to consider the amount of disparity in the front side of a screen. Thus, even when the amount of correction is calculated so that the range of disparity determined for each 3D image is not overlapped with the range of disparity of other 3D images, such calculation may be useless if the combined image is no longer visually recognized as a 3D image. Thus, it is preferable to determine the amount of correction so that the combined image can be visually recognized as a 3D image.

If the disparity controller 130 calculates the amount of correction so that the range of disparity determined for each 3D image is not overlapped with the range of disparity of other 3D images in step S113, then the disparity controller 130 acquires a reference value disp_min of disparity in the front side of a screen and a reference value disp_max of disparity in the depth side of a screen, which are not allowed to be exceeded as a 3D image (step S 114).

The values of disp_min and disp_max is the value that is appropriately set according to the size of the display 160 and viewing environments in which the user views a 3D image. In addition, the values of disp_min and disp_max may be appropriately set by the user.

If the disparity controller 130 acquires the values of disp_min and disp_max in step S 114, then the disparity controller 130 determines whether the range of disparity of a 3D image corrected using the amount of correction determined in step S113 is within the range of the acquired values of disp_min and disp_max (step S115).

From the determination in step S115, if it is determined that the range of disparity of a 3D image corrected using the amount of correction determined in step S113 can be within the range of the values of disp_min and disp_max, then the disparity controller 130 calculates the amount of correction so that it is within the range of the values of disp_min and disp_max.

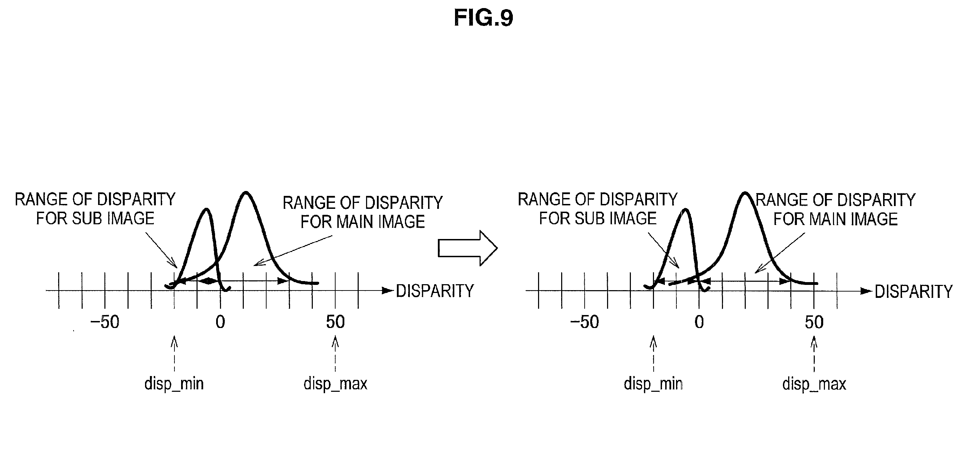

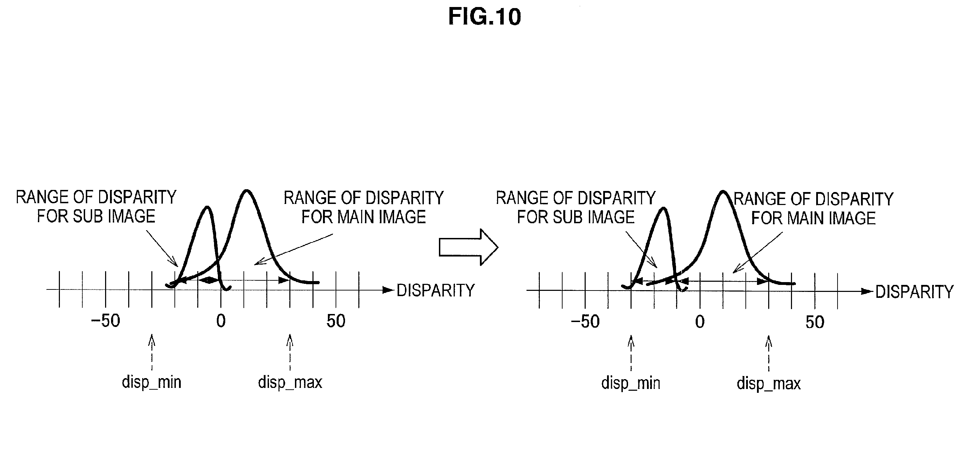

FIGS. 9 and 10 are schematic diagrams for explaining an example of calculating the amount of correction so that the range of disparity determined for each 3D image is not overlapped with the range of disparity of other 3D images and is not allowed to exceed the range of disp_min and disp_max.

For example, as shown in FIG. 9, when a 3D image obtained by combining a 3D sub image in front of 3D main image is displayed, it is assumed that the range of disparity of main image data is set to -10 to 30, the range of disparity of sub image data is set to -20 to 0, disp_min is set to -20, and disp_max is set to 50. In this case, if the sub image is shifted to the front side, the resulting image will be displayed in the front side beyond disp_min. Thus, in such a case, the disparity controller 130 controls only the main image to be shifted to the depth side by 10.

Moreover, for example, as shown in FIG. 10, when a 3D image obtained by combining a 3D sub image in front of 3D main image is displayed, it is assumed that the range of disparity of main image data is set to -10 to 30, the range of disparity of sub image data is set to -20 to 0, disp_min is set to -30, and disp_max is set to 30. In this case, if the main image is shifted to the depth side, the resulting image will be displayed in the depth side beyond disp_max. Thus, in such a case, the disparity controller 130 controls only the sub image to be shifted to the front side by 10.

Furthermore, the disparity controller 130 may control the disparity of one image of the main image and sub image to be fixed and the disparity of the other image to be varied by changing the values of disp_min and disp_max.

On the other hand, from the determination in step S115, if it is determined to be unable for the disparity of a plurality of 3D images to be not overlapped and for the range of disparity of a 3D image corrected using the amount of correction determined in step S113 to be within the range of the values of disp_min and disp_max, then the correction method that corrects the disparity by shifting the entire image to the direction perpendicular to the display surface of the display 160 cannot be employed. Accordingly, in such a case, the disparity controller 130 determines that 2D to 3D conversion is used as a correction method (step S117). The 2D to 3D conversion is a process of generating a 3D image from a 2D image in a pseudo manner. In the present embodiment, the disparity controller 130 generates a 3D image in a pseudo manner from a viewpoint of any one image of 3D images.

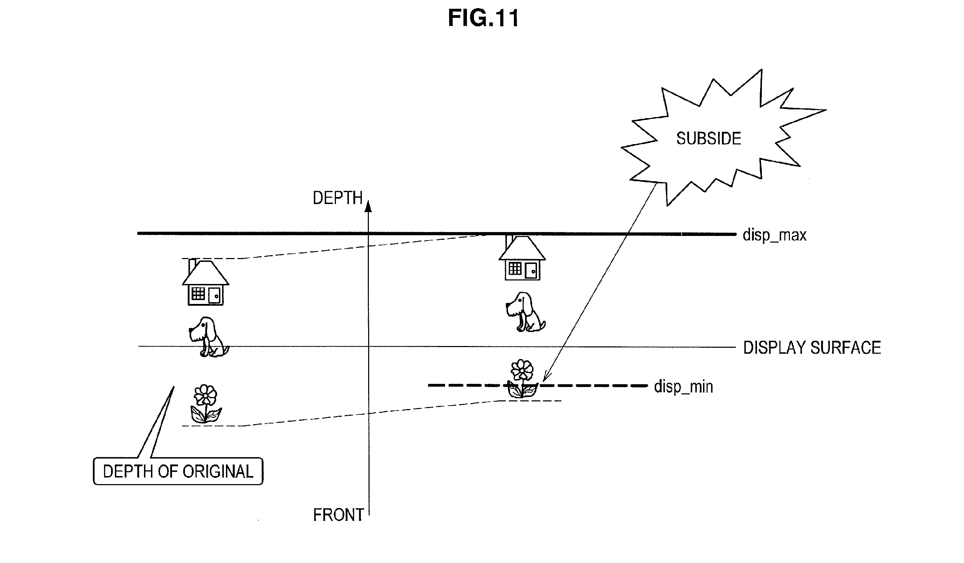

The 2D to 3D conversion can change the dynamic range of disparity (depth) without any limitation, and thus the range of disparity can be within the range of values of disp_min and disp_max. FIG. 11 is a schematic diagram for explaining an example of the relationship between an original 3D image and each of disp_min and disp_max. FIG. 11 illustrates the state where the range of disparity of an original 3D image cannot be within the range of values of disp_min and disp_max. In such a case, the disparity controller 130 performs the 2D to 3D conversion to allow the range of disparity of the 3D image to be within the range of values of disp_min and disp_max.

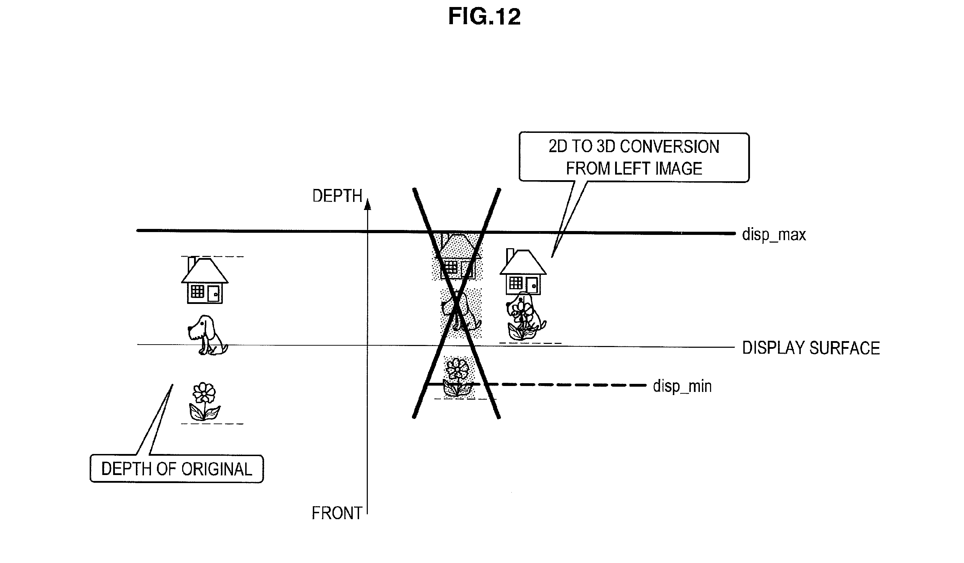

FIG. 12 is a schematic diagram for explaining an example where an original 3D image is subjected to the 2D to 3D conversion and thus the range of disparity of the 3D image is within the range of values of disp_min and disp_max. FIG. 12 illustrates the state where an image for the left eye is converted into a 3D image so that the range of disparity is within the range of values of disp_min and disp_max. In this way, the 2D to 3D conversion can change the dynamic range of disparity (depth) without any limitation, and thus even when the range of disparity in an original 3D image cannot be within the range of values of disp_min and disp_max, the range of disparity can be within the range of values of disp_min and disp_max.

The 2D to 3D conversion may be performed on any one image of main and sub images or may be performed on both. When the 2D to 3D conversion is performed, a 2D image may be converted into a 3D image while maintaining the distribution of disparity statistical information.

As described above, the operation of the image processing device 100 according to the first embodiment of the present disclosure has been described with reference to FIG. 4. In this way, the correction of disparity of a 3D image can prevent an inconsistent image from being generated when a plurality of 3D images are combined, and thereby giving far less strain and fatigue to the eyes of the user.

In the present embodiment, the disparity controller 130 acquires disp_min and disp_max and corrects disparity of a 3D image to be within the range of disp_min and disp_max, but the present disclosure is not limited to the embodiment. For example, it is said that a viewing distance suitable for 3D viewing is dependent on the screen size of the display 160, and a viewing distance suitable for 3D viewing is to be three times the length of a vertical side of the screen. Accordingly, the disparity controller 130, when correcting disparity of a 3D image, may consider information about the screen size, in particular, the length of a vertical side of the display 160, the distance between the eyes (particularly, a distance between the pupils of both eyes), and a parallax angle.

As described above, the image processing device 100 according to the first embodiment of the present disclosure, when combining a plurality of 3D images to generate one 3D image, obtains statistical information of disparity for each 3D image, obtains the range of disparity for each 3D image based on the statistical information, and determines a method and method of correction to cause the range of disparity for each 3D image not to be overlapped. When a method and amount of correction are determined, the method and amount of correction are determined to be within the range from a reference value disp_min of disparity in the front side of a screen to a reference value disp_max of disparity in the depth side of a screen, which is not allowed to be exceeded as a 3D image.

In this way, the method and amount of correction for each 3D image are determined and each 3D image is combined, and thus a 3D image that gives far less eye strain and fatigue to the user can be generated and the generation of an inconsistent image in which a 3D image is displayed while being overlapped with and subsided into another 3D image can be prevented.

### <2. Second Embodiment>

In the first embodiment of the present disclosure described above, the generation of an inconsistent image with a subsided portion is prevented by shifting disparity of the entire image. In a second embodiment of the present disclosure, there will be described a way of preventing the generation of an inconsistent image with a subsided portion by detecting an area of an object such as a subject included in a screen and by performing the analysis and control of disparity in units of objects for each image.

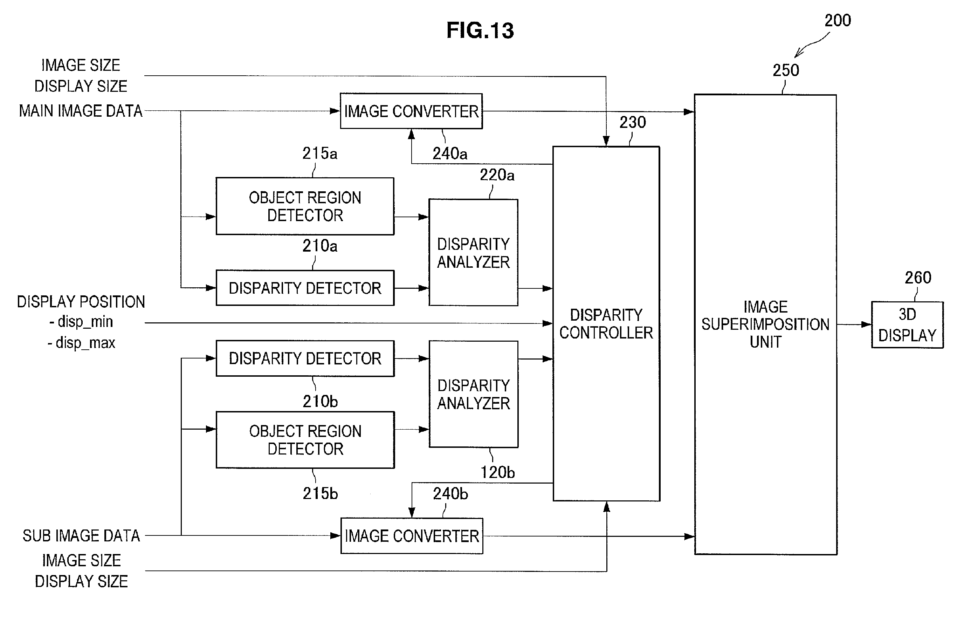

FIG. 13 is a schematic diagram for explaining a functional configuration of an image processing device according to the second embodiment of the present disclosure. The functional configuration of the image processing device according to the second embodiment of the present disclosure is described with reference to FIG. 13.

The image processing device 200 receives main image data, sub image data, and so on which are read out from a recording medium such as BD (Blu-ray™ disc) or are transmitted from external equipment via a network or the like, which is similar to the image processing device 100 according to the first embodiment of the present disclosure. The image processing device 200 combines a 3D main image and a 3D sub image to generate combined image data.

As shown in FIG. 13, the image processing device 200 is configured to include disparity detectors 210a and 210b, object region detectors 215a and 215b, disparity analyzers 220a and 220b, a disparity controller 230, image converters 240a and 240b, an image superimposition unit 250, and a display 260.

The disparity detector 210a detects disparity of a 3D main image for each pixel using image data of a main image for the left eye and image data of a main image for the right eye that constitute main image data inputted from the outside, which is similar to the disparity detector 110a. The disparity detector 210b detects disparity of a 3D sub image for each pixel using image data of a main image for the left eye and image data of a sub image for the right eye that constitute sub image data inputted from the outside, which is similar to the disparity detector 110b.

The object region detector 215a detects a region of an object such as a subject for main image data inputted from the outside. The object region detector 215a detects the region of an object, for example, by employing segmentation technique that uses a graph cut method disclosed in JP 2011-34178A or the like. The object region detector 215a sends information about the detected object region of a main image to the disparity analyzer 220a.

Similarly, the object region detector 215b detects a region of an object such as a subject for sub image data inputted from the outside. The object region detector 215b sends information about the detected object region of a sub image to the disparity analyzer 220b.

The disparity analyzer 220a analyzes disparity information of the 3D main image detected by the disparity detector 210a in units of objects of the main image detected by the object region detector 215a and generates disparity statistical information of the 3D main image in units of objects of the main image. The disparity analyzer 220a may generate, as the disparity statistical information, a disparity distribution, for example, using a technique disclosed in JP 2011-055022A or a disparity map that indicates disparity for each pixel of a main image, which is similar to the disparity analyzer 120a. The generation of a disparity map may employ, for example, a technique disclosed in JP 2006-114023A. The disparity analyzer 220a, when generating disparity statistical information of the 3D main image in units of objects of the main image, provides the generated disparity statistical information to the disparity controller 230.

Similarly, the disparity analyzer 220b analyzes disparity information of the 3D sub image detected by the disparity detector 210b in units of objects of the sub image detected by the object region detector 215b to generate disparity statistical information. The disparity analyzer 220b, when generating disparity statistical information of the 3D sub image in units of objects, provides the generated disparity statistical information to the disparity controller 230.

The disparity controller 230 receives the image size, display size, and display position of a 3D main image that are inputted from the outside, which is similar to the disparity controller 130. In addition, the disparity controller 230 receives the image size, display size, and display position of a 3D sub image that are inputted from the outside, which is similar to the disparity controller 130. Information indicating a reference value of disparity in the front and depth sides, which is not allowed to be exceeded as a 3D image, is provided to the disparity controller 130 as information regarding the display position.

The disparity controller 230 determines a method and amount of correction that are used to adjust disparity (depth) of the respective main and sub images so that inconsistency such as subsidence does not occur in units of objects for each image, based on disparity statistical information in units of objects of the 3D main image provided from the disparity analyzer 220a and disparity statistical information in units of objects of the 3D sub image provided from the disparity analyzer 220b.

A way in which the disparity controller 230 determines a method and amount of correction that are used to adjust disparity (depth) of the respective main and sub images is basically similar to the process by the disparity controller 130. However, the disparity controller 230 is different from the disparity controller 130 in that the disparity controller 230 determines a method and amount of correction in units of images and units of objects. The disparity controller 230, when determining a method and amount of correction that are used to adjust disparity (depth) of the respective 3D main and sub images in units of objects, provides information on the determined method and amount of correction to the image converters 240a and 240b.

The image converter 240a processes a 3D main image, based on the method and amount of correction that are used to adjust disparity (depth) of the 3D main image in units of objects and are determined by the disparity controller 230, which is similar to the image converter 140a. The image converter 240a, when processing the 3D main image, provides the processed 3D main image to the image superimposition unit 250.

The image converter 240b processes a 3D sub image, based on the method and amount of correction that are used to adjust disparity (depth) of the 3D sub image in units of objects and are determined by the disparity controller 230, which is similar to the image converter 240a. The image converter 240b, when processing the 3D sub image, provides the processed 3D sub image to the image superimposition unit 250.

The image superimposition unit 250 superimposes the 3D main image processed by the image converter 240a and the 3D sub image processed by the image converter 240b, which is similar to the image superimposition unit 150. The image superimposition unit 250, when superimposing the 3D main and sub images, provides display image data obtained by superimposition to the display 260.

The display 260 is formed of a 3D display capable of displaying a 3D image. The display 260 displays a screen for the left eye and a screen for the right eye in a time division manner using the display image data provided from the image superimposition unit 250, which is similar to the display 160.. In this case, the user views an image displayed on the display 260, for example, by wearing glasses with shutters in synchronization with switching between screens for the left and right eyes. The user views the left-eye screen by only the left eye and views the right-eye screen by only the right eye. Thus, the user can view a 3D image in which a 3D main and sub images are superimposed on each other.

The display 260 may be formed of a 3D display that allows the user to recognize a 3D image with naked eyes. Such a 3D display employs, for example, a parallax barrier system (disparity barrier system), a lenticular system, or the like.

As described above, the functional configuration of the image processing device according to the second embodiment of the present disclosure has been described with reference to FIG. 13. Subsequently, an operation of the image processing device according to the second embodiment of the present disclosure will be described.

### [Operation of Image Processing Device]

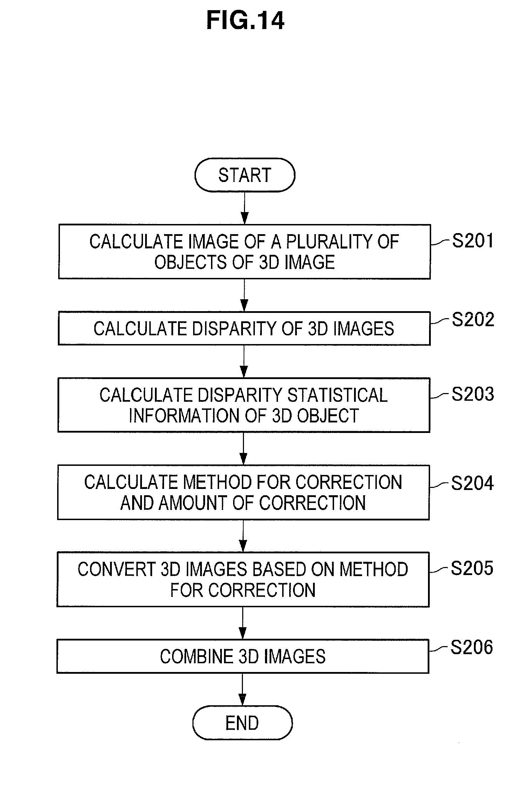

FIG. 14 is a flowchart illustrating the operation of the image processing device 200 according to the second embodiment of the present disclosure. The operation of the image processing device 200 according to the second embodiment of the present disclosure is described with reference to FIG. 14.

The image processing device 200 according to the second embodiment of the present disclosure, when receiving a plurality of 3D image data (for example, 3D main and sub image data), calculates a region of an object included in each 3D image (step S201). The calculation of the region of object is executed by the object region detectors 215a and 215b.

Furthermore, after, before, or during the calculation of the region of object in step S201, the image processing device 200 calculates disparity of each 3D image (step S202). The calculation of disparity for each 3D image is executed by the disparity detectors 210a and 210b.

If each object region for a plurality of 3D image data is obtained in step S201 and the disparity of each 3D image for a plurality of 3D image data is calculated in step S202, then the image processing device 200 analyzes disparity information of each 3D image in units of objects to generate disparity statistical information of the 3D image in units of objects (step S203). The generation of the disparity statistical information of the 3D image is executed by the disparity analyzers 220a and 220b.

If the disparity statistical information of the 3D image is generated in units of objects by analyzing disparity information of the 3D image for a plurality of 3D image data in units of objects in step S203, then the image processing device 200 calculates a method and amount of correction which are used to correct the 3D image in units of objects based on the disparity statistical information of the 3D image and information including an image size, a display size, and a display position of the 3D image (step S204). The calculation of the method and amount of correction used to correct each 3D image in units of objects is executed by the disparity controller 230.

In the present embodiment, the method and amount of correction are determined in units of objects, and thus a process different from the first embodiment will be described in detail. Objects that are not overlapped on an image plane do not cause inconsistency such as subsidence, regardless of how much the range of disparity is changed in each 3D image. Accordingly, in the present embodiment, the disparity controller 230 determines the method and amount of correction so that there is no inconsistency such as subsidence for a group of objects having an overlapping region on an image plane.

Moreover, for example, when there are three objects A, B, and C, if objects A and B have no region overlapped with each other and object C has a region overlapped with objects A and B, the disparity controller 230 may determine first the method and amount of correction for object C having overlapped portions greater than other objects, and then determine the method and amount of correction for objects A and B.

Furthermore, the disparity controller 230, when determining the method and amount of correction in units of objects, may determine the method and amount of correction by considering the positional relationship between each object in the depth direction. For example, when two objects A and B are shown in a 3D image, if there a scene in which object A is not allowed to be placed behind object B, the disparity controller 230 may determine the method and amount of correction so that object A is not allowed to be placed behind object B or object B is not allowed to be placed in front of object A.

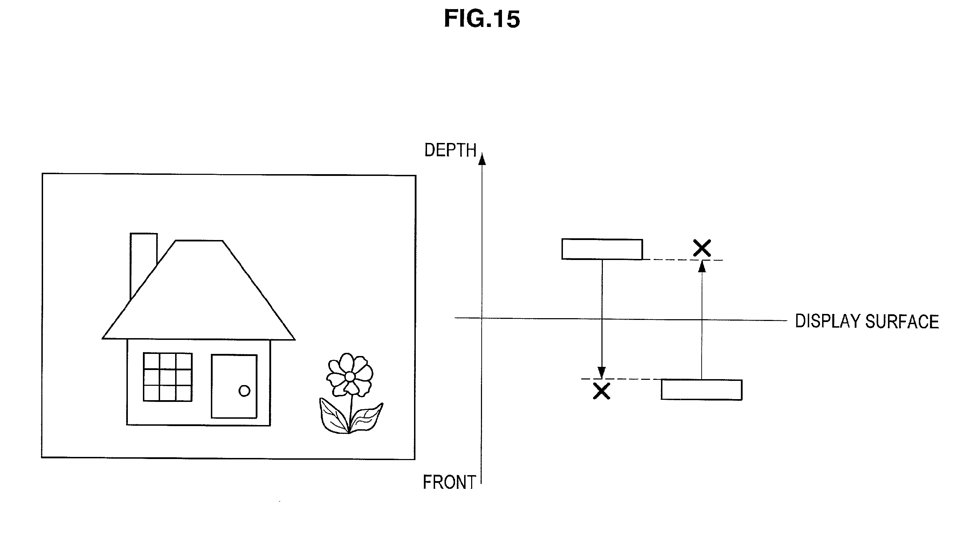

FIG. 15 is a schematic diagram for explaining an example of positional relationship between objects in a 3D image. The left side of FIG. 15 shows a screen image displayed on the display 260, and the right side of FIG. 15 shows an image when the positional relationship between objects in a 3D image is looked down from the upper side of the display 260.

FIG. 15 illustrates a house and a flower as an object. The positional relationship between objects is assumed that the house is not allowed to be placed in front of the flower. In this case, the disparity controller 230 determines the method and amount of correction so that the flower is not allowed to be placed behind the house or the house is not allowed to be placed in front of the flower.

Information on the positional relationship may be provided to the disparity controller 230 together with image data or may be obtained by allowing the disparity controller 230 to perform scene analysis of image data.

If the method and amount of correction for each 23D image are calculated in units of objects in step S204, then the image processing device 200 converts a 3D image based on the method and amount of correction in units of objects of a 3D image calculated in step S204 (step S205). The conversion of a 3D image is executed by the image converters 240a and 240b.

If the correction method is the shift correction in the direction perpendicular to a display surface of the display 260, the region of an object in an image is shifted according to the amount of shift correction of each of the objects. In addition, if the correction method is the 2D to 3D conversion, the region of an object in an image is subjected to the 2D to 3D conversion. These two correction methods, of course, may be performed concurrently.

Furthermore, in the both correction methods, a region (an occlusion area) that does not exist in a boundary between objects occurs, and thus this may be complemented from image information of other viewpoints, may be complemented from image information in the temporal direction of the same viewpoint, or may be complemented from information (neighboring image information) in the spatial direction of the current image (image inpainting).

If the conversion is performed for each 3D image in step S205 based on the method and amount of correction in units of objects of a 3D image calculated in step S204, then the image processing device 200 combines a plurality of 3D images and generates display image data used to be displayed as one 3D image (step S206).

The image processing device 200 according to the second embodiment of the present disclosure which performs the operation as shown in FIG. 14, allows preventing an inconsistent image from being generated when a plurality of 3D images are combined, thereby giving far less strain and fatigue to the eyes of the user. In addition, the image processing device 200 according to the second embodiment of the present disclosure calculates the method and amount of correction in units of objects, thereby changing the disparity range of an image with more flexibility.

### <3. Summary>

As described above, according to one or more embodiments of the present disclosure, it is possible to prevent an inconsistent image from being generated when a plurality of 3D images are combined, thereby giving far less strain and fatigue to the eyes of the user. In the first embodiment of the present disclosure, the method and amount of correction are determined for each 3D image in units of screens. In addition, in the second embodiment of the present disclosure, the method and amount of correction are determined for each 3D image in units of screens and in units of objects. In these cases, they are determined to be within the range from a reference value of disparity in the front side of a screen to a reference value of disparity in the depth side of a screen, which is not allowed to be exceeded as a 3D image, and thus it is possible to generate a natural 3D image with no an overlapped and subsided portion when performing combination.

In the embodiments described above, although there has been illustrated the process to be used when two 3D image, that is, a 3D main image and a 3D sub image are combined, the present disclosure is not limited thereto. Three or more 3D images can be similarly applied even to the case of combining the images while not giving far less eye strain and fatigue to the user.

Moreover, in the embodiments described above, although there has been described the image processing devices 100 and 200 that include the displays 160 and 260, respectively, the present disclosure is not limited thereto. The combination of 3D images may be executed by the image processing device, and the display of a 3D image may be executed by another equipment. In addition, the process executed by the image processing device 100 or 200 may be executed by a group of servers connected to the 3D display that displays a 3D image via a network, and the image data obtained by combining 3D images may be received by the 3D display from the group of servers via a network.

Furthermore, the processes described in the embodiments described above may be performed by hardware or may be performed by software. When the processes described in the embodiments described above are performed by software, a controller such as CPU incorporated in the image processing device 100 or 200 may sequentially read out and execute computer programs stored in a recording medium such as ROM, HDD, and SSD.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

Additionally, the present technology may also be configured as below.
(1)
   An image processing device including:
   a disparity detector configured to receive a plurality of 3D images and detect disparity of each of the 3D images;
   a disparity analyzer configured to generate statistical information about disparity of each 3D image using the disparity of each 3D image detected by the disparity detector; and
   a disparity controller configured to convert the disparity using the statistical information about disparity of each 3D image generated by the disparity analyzer in such a manner that the 3D images are not overlapped so that a range of the disparity is within a predetermined range.
(2)
   The image processing device according to (1), further including:
   an image converter configured to perform 2D to 3D conversion processing on at least one 3D image of the plurality of 3D images when a range of the disparity converted by the disparity controller is not within the predetermined range.
(3)
   The image processing device according to (1), further including:
   an object region detector configured to detect a region of an object in each of the supplied 3D images,
   wherein the disparity analyzer generates statistical information about disparity in units of objects of each 3D image detected by the object region detector, and the disparity controller converts the disparity using the statistical information about disparity in units of objects generated by the disparity analyzer in such a manner that objects included in each 3D image are not overlapped so that a range of the disparity is within a predetermined range.
(4)
   The image processing device according to (3), further including:
   an image converter configured to perform 2D to 3D conversion processing on at least one of the objects detected by the object region detector when a range of the disparity converted by the disparity controller is not within the predetermined range.
(5)
   The image processing device according to any of (1) to (4), wherein the disparity controller converts the disparity within a range of disparity in a front side and a depth side when displaying a 3D image, the range of disparity not being allowed to be exceeded.
(6)
   The image processing device according to (1) to (5), wherein the disparity controller converts the disparity by considering a size of a screen on which a 3D image is to be displayed.
(7)
   The image processing device according to (6), wherein the disparity controller converts the disparity by considering a length of a vertical side of a screen on which a 3D image is to be displayed.
(8)
   An image processing method including:
   receiving a plurality of 3D images and detecting disparity of each of the 3D images;
   generating statistical information about disparity of each 3D image using the detected disparity of each 3D image; and
   converting the disparity using the generated statistical information about disparity of each 3D image in such a manner that the 3D images are not overlapped so that a range of the disparity is within a predetermined range.
(9)
   A computer program for causing a computer to execute:
   receiving a plurality of 3D images and detecting disparity of each of the 3D images;
   generating statistical information about disparity of each 3D image using the detected disparity of each 3D image; and
   converting the disparity using the generated statistical information about disparity of each 3D image in such a manner that the 3D images are not overlapped so that a range of the disparity is within a predetermined range.

### Reference Signs List

- 100: image processing device
- 110a: disparity detector
- 110b: disparity detector
- 120a: disparity analyzer
- 120b: disparity analyzer
- 130: disparity controller
- 140a: image converter
- 140b: image converter
- 150: image superimposition unit
- 160: display
- 200: image processing device
- 210a: disparity detector
- 210b: disparity detector
- 215a: object region detector
- 215b: object region detector
- 220a: disparity analyzer
- 220b: disparity analyzer
- 230: disparity controller
- 240a: image converter
- 240b: image converter
- 250: image superimposition unit
- 260: display

## Claims

1. An image processing device comprising:
a disparity detector configured to receive a plurality of 3D images and detect disparity of each of the 3D images;
a disparity analyzer configured to generate statistical information about disparity of each 3D image using the disparity of each 3D image detected by the disparity detector; and
a disparity controller configured to convert the disparity using the statistical information about disparity of each 3D image generated by the disparity analyzer in such a manner that the 3D images are not overlapped so that a range of the disparity is within a predetermined range.

2. The image processing device according to claim 1, further comprising:
an image converter configured to perform 2D to 3D conversion processing on at least one 3D image of the plurality of 3D images when a range of the disparity converted by the disparity controller is not within the predetermined range.

3. The image processing device according to claim 1, further comprising:
an object region detector configured to detect a region of an object in each of the supplied 3D images,
wherein the disparity analyzer generates statistical information about disparity in units of objects of each 3D image detected by the object region detector, and the disparity controller converts the disparity using the statistical information about disparity in units of objects generated by the disparity analyzer in such a manner that objects included in each 3D image are not overlapped so that a range of the disparity is within a predetermined range.

4. The image processing device according to claim 3, further comprising:
an image converter configured to perform 2D to 3D conversion processing on at least one of the objects detected by the object region detector when a range of the disparity converted by the disparity controller is not within the predetermined range.

5. The image processing device according to claim 1, wherein the disparity controller converts the disparity within a range of disparity in a front side and a depth side when displaying a 3D image, the range of disparity not being allowed to be exceeded.

6. The image processing device according to claim 1, wherein the disparity controller converts the disparity by considering a size of a screen on which a 3D image is to be displayed.

7. The image processing device according to claim 6, wherein the disparity controller converts the disparity by considering a length of a vertical side of a screen on which a 3D image is to be displayed.

8. An image processing method comprising:
receiving a plurality of 3D images and detecting disparity of each of the 3D images;
generating statistical information about disparity of each 3D image using the detected disparity of each 3D image; and
converting the disparity using the generated statistical information about disparity of each 3D image in such a manner that the 3D images are not overlapped so that a range of the disparity is within a predetermined range.

9. A computer program for causing a computer to execute:
receiving a plurality of 3D images and detecting disparity of each of the 3D images;
generating statistical information about disparity of each 3D image using the detected disparity of each 3D image; and
converting the disparity using the generated statistical information about disparity of each 3D image in such a manner that the 3D images are not overlapped so that a range of the disparity is within a predetermined range.
